# FASCICULE DE BREVET EUROPEEN

(11) **EP 2 367 988 B1**
(45) Date de publication et mention de la délivrance du brevet: **18.05.2016**
(21) Numéro de dépôt: 08875638.2
(22) Date de dépôt: 10.07.2008
(51) Int. Cl.: E04B 2/70, E04C 2/24

(54) **CONSTRUCTION MODULAIRE POUR BATIMENT**
MODULARES BAUWERK
MODULAR CONSTRUCTION FOR BUILDINGS

(43) Date de publication de la demande: 28.09.2011
(73) Titulaire: Miquel, Hervé, 38660 Le Touvet (FR); Jodelet, François, 38500 Voiron (FR)
(72) Inventeur: Miquel, Hervé, 38660 Le Touvet (FR); Jodelet, François, 38500 Voiron (FR)
(74) Mandataire: Jeannet, Olivier
(86) Numéro de dépôt international: PCT/FR2008/051297
(87) Numéro de publication internationale: WO 2010/004097

(56) Documents cités:
- EP-A- 0 058 287
- DE-U1- 9 410 972
- FR-A- 2 729 414
- GB-A- 444 069
- GB-A- 1 027 503
- GB-A- 2 180 860

## Description

La présente invention concerne le domaine général des éléments de construction et d'isolation utilisés pour la construction de bâtiments.

De tels éléments de construction et d'isolation phonique et thermique peuvent être utilisés plus particulièrement pour la réalisation de murs et de cloisons de locaux professionnels ou encore de maisons individuelles pour particuliers.

On connaît des réalisations comportant une âme isolante disposée entre des plaques rigides et pourvue de deux couches de mousse en matière plastique maintenues écartées l'une par rapport à l'autre par des cales d'espacement. L'âme isolante comporte encore un matériau isolant, tel que de la laine de verre, logé entre les plaques rigides dans les espaces délimités par les cales d'espacement. Pour plus de détails, on pourra par exemple se référer à la demande de brevet français FR-A1-2 846 682.

De telles réalisations comprennent encore classiquement un bardage extérieur et une plaque de finition intérieure maintenus respectivement à distance de la plaque rigide associée pour délimiter de part et d'autre de l'âme isolante des espaces emplis d'air.

Une telle structure a pour inconvénient majeur de comporter un grand nombre d'éléments à assembler, ce qui requiert un temps d'assemblage et de montage relativement long.

En outre, pour la construction de maisons individuelles ou de locaux, il est nécessaire de pouvoir permettre le passage de câbles d'alimentation électriques.

Or, avec une telle structure, il convient dans ce but de prévoir des perçages dans l'âme isolante.

Ceci favorise d'éventuelles infiltrations d'air, d'humidité et d'eau à l'intérieur de cette dernière pouvant provoquer une détérioration de ses caractéristiques isolantes.

La présente invention a donc pour but de remédier à ces inconvénients.

Plus particulièrement, la présente invention vise à prévoir un élément de construction et d'isolation thermique et phonique de conception simple, facile à fabriquer, et à assembler afin de réduire le temps de montage d'une structure obtenue à partir d'une pluralité de ces éléments.

La présente invention a encore pour but de prévoir un élément de construction porteur pour la réalisation des murs d'un bâtiment sans qu'il soit nécessaire de prévoir de moyens additionnels pour sa charpente.

Les documents GB 2 180 860 et GB 1 027 503 décrivent des ensembles d'éléments ne permettant pas de remédier aux inconvénients précités de manière satisfaisante. Le préambule de la revendication 1 annexée mentionne les caractéristiques connues par le document GB 1 027 503.

L'invention a donc pour objet un ensemble d'éléments pour la construction et l'isolation d'un bâtiment, chaque élément comprenant des première et seconde plaques de rigidification ou de renfort et une âme isolante disposée entre lesdites plaques et réalisée en liège. Les plaques de rigidification et l'âme isolante sont assemblées les unes contre les autres.

Avantageusement, les plaques de rigidification et l'âme isolante sont en contact l'une contre l'autre sur l'ensemble de leur largeur et de leur longueur. En d'autres termes, il n'existe aucun espace entre d'une part l'une des plaques de rigidification et l'âme isolante, et d'autre part entre ladite âme et l'autre plaque.

Dans un mode de réalisation, l'âme isolante est réalisée en liège aggloméré. Les plaques de rigidification peuvent quant à elles être réalisées en bois, et sont de préférence identiques. Ces plaques de rigidification et l'âme isolante peuvent être assemblées entre elles par collage.

Le rapport entre l'épaisseur de l'âme isolante et l'épaisseur totale des plaques de rigidification est compris entre 0, 5 et 1, en étant de préférence égale à 1. L'épaisseur de l'âme isolante est comprise entre 80 et 100 mm, et de préférence égale à 100 mm.

L'élément de construction peut également comporter des plaques de finition extérieure et intérieure montées en appui contre les plaques de rigidification. Avantageusement, l'élément de construction et d'isolation est constitué par les plaques de rigidification, l'âme isolante et les plaques de finition extérieure et intérieure. En d'autres termes, l'élément de construction est dépourvu de toute autre armature de renfort.

L'âme isolante présente des dimensions réduites par rapport à celles des plaques de rigidification.

L'invention concerne également un bâtiment comprenant des éléments de construction et d'isolation tels que définis précédemment, et assemblés entre eux pour constituer les murs dudit bâtiment.

L'invention sera mieux comprise à l'étude de la description détaillée d'un mode de réalisation pris à titre d'exemple nullement limitatif et illustré par les dessins annexés, sur lesquels :
- la figure 1 est une vue en perspective d'un élément de construction selon la présente invention,
- la figure 2 est une vue en coupe transversale partielle de l'élément de construction de la figure 1,
- la figure 3 est une vue en perspective d'un assemblage côte à côte de deux éléments de construction de la figure 1,
- la figure 4 est une vue en coupe transversale partielle de l'assemblage de la figure 3, et
- les figures 5 et 6 illustrent en coupe transversale partielle deux assemblages en angle de deux éléments de construction de la figure 1.

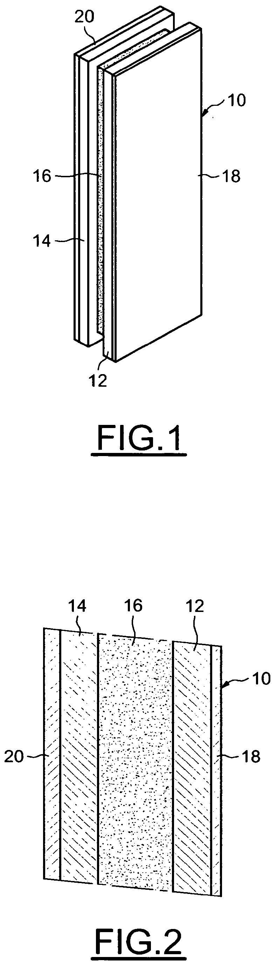

Sur les figures 1 et 2, on a représenté un élément, désigné par la référence numérique générale 10, et prévu pour être utilisé pour la construction et l'isolation phonique et thermique d'un bâtiment, tel qu'une maison individuelle. Sur la figure 1, l'élément 10 est dans une position supposée verticale.

L'élément 10 forme un organe modulaire destiné à être assemblé avec d'autres organes modulaires identiques de manière former à une structure autoporteuse constituant la charpente du bâtiment.

L'élément 10 comporte principalement deux plaques de rigidification 12, 14 espacées l'une par rapport à l'autre et une âme isolante 16 disposée transversalement entre lesdites plaques.

Les plaques 12, 14 ou panneaux sont réalisés dans un matériau rigide, résistant et économique, par exemple du bois, et notamment du contreplaqué. Les plaques 12, 14, en regard l'une par rapport à l'autre, sont identiques entre elles et de forme générale rectangulaire. A titre indicatif, elles présentent une largeur comprise entre 0,8 et 1,2m, et de préférence égale à 1 m, une hauteur comprise entre 2,70 m et 3 m, et une épaisseur comprise entre 50 et 80 mm, et de préférence égale à 50 mm.

De manière à obtenir de bonnes propriétés d'isolation phonique et thermique, l'âme 16 isolante est quant à elle réalisée en liège, notamment en liège aggloméré. L'âme 16 isolante peut avantageusement être fabriqué à base de granulés de liège expansés, ayant par exemple une granulométrie comprise entre 4 et 16 mm, et agglomérés à la vapeur surchauffée. On obtient ainsi une âme isolante 16 se présentant sous la forme d'une plaque rigide ayant de bonnes propriétés de résistance mécanique, notamment à la compression. L'âme isolante 16 présente un coefficient de conductivité faible. Le coefficient de conductivité est par ailleurs relativement stable grâce à la faible perméabilité à la vapeur d'eau. La masse volumique du liège peut être comprise entre 100 et 130 kg/m³, et de préférence égale à 115.

L'âme isolante 16 est centrée sur les faces internes en regard des plaques 12, 14 et fixées sur celles-ci par collage. Bien entendu, il pourrait être possible de prévoir une fixation par tout autre moyen approprié, par exemple par vissage.

Toutefois, l'utilisation de colle permet de réaliser un assemblage de l'âme isolante 16 contre les plaques 12, 14 de manière particulièrement simple, économique et sans utilisation de pièces métalliques. En outre, il est ainsi possible d'encoller l'âme isolante 16 et/ou les plaques 12, 14 sur des zones relativement importantes de façon à fixer fermement et durablement l'âme isolante et limiter son risque de tassement dans le temps. A cet égard, après avoir encollé les plaques 12, 14 et l'âme isolante 16, on dispose ces éléments en appui les uns contre les autres, puis on peut les compresser mécaniquement de façon à obtenir une bonne solidarisation entre eux.

L'âme isolante 16, de forme générale rectangulaire, présente des dimensions réduites relativement aux plaques 12, 14 de rigidification de manière à ce que chaque bord libre de l'âme soit en retrait et à distance constante des bords libres correspondants des plaques 12, 14. Il existe donc transversalement entre lesdites plaques 12, 14 un espace périphérique dépourvu d'âme isolante 16. Pour chaque côté de l'élément 10, l'écart entre le bord libre de l'âme isolante 16 et les bords libres correspondants des plaques 12, 14 est constant et peut par exemple être de l'ordre de 100 mm.

Comme cela sera décrit plus en détail par la suite, cet espace ou dégagement permet le montage d'une poutre de fixation en vue de l'assemblage de deux éléments de construction 10 identiques.

Par ailleurs, l'existence d'un rapport entre l'épaisseur totale des plaques 12, 14 et celle de l'âme isolante 16 compris entre 0,5 et 1, et de préférence égale à 1, combiné à l'utilisation d'une âme isolante 16 en liège aggloméré ayant une épaisseur comprise entre 80 et 100 mm, et de préférence égale à 100 mm, permet d'obtenir un élément 10 de construction rigide, et particulièrement efficace pour l'isolation thermique et phonique.

On obtient également ainsi un élément 10 de construction autoporteur sans qu'il soit nécessaire d'utiliser d'autres éléments de charpente pour la réalisation du bâtiment et comportant des propriétés d'isolation phonique et thermique relativement satisfaisante dans la mesure où les épaisseurs des plaques 12, 14 de rigidification et de l'âme isolante 16 sont relativement importantes.

Par ailleurs, compte tenu de l'épaisseur relativement importante des plaques 12 et 14, on peut réaliser aisément des perçages pour le passage de câbles, notamment de câbles électriques, à l'intérieur de celles-ci en limitant le risque de détérioration de l'âme isolante 16.

L'élément 10 comporte également des plaques 18, 20 de finition montées respectivement contre les plaques 12, 14. Les plaques 18, 20 sont respectivement prévues pour des finitions intérieure et extérieure. La plaque 20 de finition destinée à être à l'extérieur du bâtiment peut par exemple être réalisée en bois et comporter, de manière connue en soi, un traitement contre l'humidité. La plaque 18 de finition peut être par exemple être réalisée en placoplâtre^{®} et comporter des décors pour la décoration de l'intérieur du bâtiment.

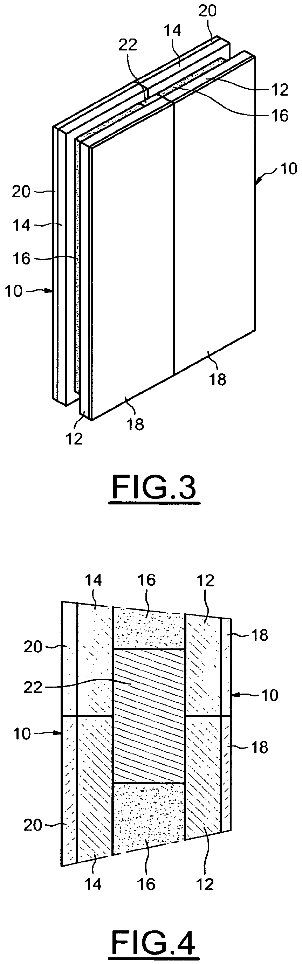

Comme illustré aux figures 3 et 4, pour relier entre eux deux éléments 10 de construction disposés côte à côte, une poutre de fixation 22 verticale est prévue entre ces deux éléments. Les éléments 10 de construction sont en contacts l'un contre l'autre par leurs bords de grand côté. La poutre 22, de forme générale parallélépipédique, s'étend transversalement entre les plaques 12, 14 de chaque élément 10 de manière à remplir l'espace laissé libre par les âmes isolantes 16 entre les plaques 12, 14 desdits éléments. La poutre 22 forme une entretoise venant en appui contre les plaques 12, 14 et les âmes isolantes 16. Elle est fixée par collage sur les plaques 12, 14.

Sur ces figures, il n'est représenté que deux éléments 10 de construction modulaires assemblés. On conçoit aisément que le nombre d'éléments 10 alignés horizontalement et assemblés dépend de la dimension souhaitée du bâtiment à construire.

D'une manière analogue, on peut assembler verticalement des éléments 10 en utilisant des poutres horizontales se logeant entre les plaques 12, 14 de deux éléments 10 immédiatement adjacents en considérant le sens vertical. Il est par exemple possible de prévoir un empilement vertical de quatre éléments 10 de façon à former un bâtiment à quatre étages.

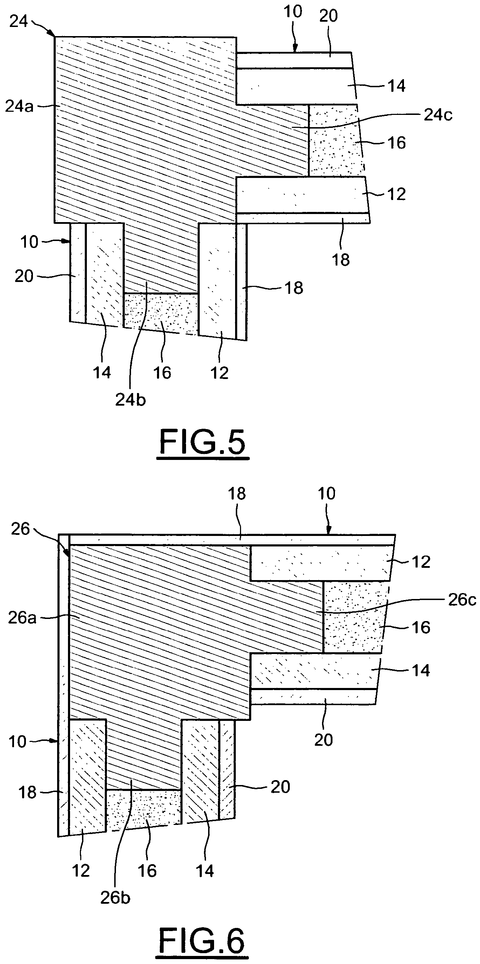

Sur les figures 5 et 6 sont représentés en coupe des assemblages de deux éléments 10 de construction de manière à former des angles à 90° pour le bâtiment. A cet égard, des poutres 24, 26 de fixation verticales de forme générale parallélépipédique sont prévues. Elles comportent chacune un corps principal 24a, 26a contre lequel les éléments 10 viennent en appui contre deux côtés adjacents, et deux extensions 24b et 24c, 26b et 26c prévues pour venir se loger transversalement entre les plaques 12, 14 d'un élément 10 en étant en appui contre celles-ci et les âmes isolantes 16. Les poutres 24, 26 sont fixées par collage sur les plaques 12, 14 des éléments 10 de construction. Des vis sont encore prévues au niveau des extensions 24b et 24c, 26b et 26c pour assujettir les poutres 24, 26 et les éléments 10.

Les figures 4 et 5 illustrent respectivement des assemblages de deux éléments 10 de construction dits à « angle rentrant » pour lequel le côté intérieur du bâtiment est sur la droite de la figure et à angle sortant pour lequel le côté intérieur est sur la gauche de la figure.

Grâce à l'invention, on obtient un élément de construction pouvant être assemblé de manière particulièrement simple, économique et rapide avec d'autres éléments modulaires identiques de manière former à une structure autoporteuse constituant la charpente du bâtiment et présentant de bonnes propriétés d'isolation thermique et phonique.

En outre, le bâtiment ainsi obtenu ne comportant pas de pièces métalliques, hormis au niveau de ses angles, il peut être aisément réalisé des ouvertures dans l'épaisseur des éléments de construction pour le montage ultérieur de portes et de fenêtres.

## Revendications

1. Ensemble d'éléments pour la construction et l'isolation d'un bâtiment, comprenant :
des éléments de construction dont chacun est formé de première et seconde plaques de rigidification (12, 14) identiques entre elles et de forme rectangulaire, et d'une âme isolante (16) de forme rectangulaire disposée entre lesdites plaques et réalisée en liège, les plaques de rigidification (12, 14) et l'âme isolante étant assemblées les unes contre les autres, l'âme isolante (16) présentant des dimensions réduites par rapport à celles des plaques de rigidification (12, 14) et est centrée sur les faces internes en regard de ces plaques (12, 14), de manière à ce que chaque bord libre de l'âme soit en retrait et à distance constante des bords libres correspondants des plaques (12, 14);
**caractérisé :**
- **en ce que**, pour chaque élément de construction,
- le rapport entre l'épaisseur de l'âme isolante (16) et l'épaisseur totale des plaques de rigidification (12, 14) est compris entre 0, 5 et 1, et de préférence égale à 1,
- l'épaisseur de l'âme isolante (16) est comprise entre 80 et 100 mm, et de préférence égale à 100 mm,
- il existe transversalement entre lesdites plaques (12, 14) un espace périphérique dépourvu d'âme isolante (16) ; et
- **en ce que** l'ensemble d'éléments comprend des poutres de fixation (22) verticales, permettant de relier entre eux deux éléments de construction (10) disposés côte à côte, chaque poutre (22) étant de forme générale parallélépipédique et, lorsque deux éléments de construction (10) sont en contact l'un contre l'autre par leurs bords de grand côté, la poutre (22) s'étend transversalement entre les plaques (12, 14) de chaque élément de construction (10) de manière à remplir l'espace laissé libre par les âmes isolantes (16) entre les plaques (12, 14) desdits éléments de construction (10).

2. Ensemble d'éléments selon la revendication 1, dans lequel les plaques de rigidification (12, 14) sont réalisées en bois.

3. Ensemble d'éléments selon la revendication 1 ou la revendication 2, dans lequel l'âme isolante (16) est réalisée en liège aggloméré.

4. Ensemble d'éléments selon l'une quelconque des revendications précédentes, dans lequel les plaques de rigidification (12, 14) et l'âme (16) isolante sont assemblées entre elles par collage.

5. Ensemble d'éléments selon l'une quelconque des revendications précédentes, dans lequel les éléments de construction (10) comportant des plaques de finition (18, 20) extérieure et intérieure montées en appui contre les plaques de rigidification (12, 14).

6. Ensemble d'éléments selon l'une quelconque des revendications précédentes, comprenant des poutres horizontales se logeant entre les plaques (12, 14) de deux éléments de construction (10) immédiatement adjacents.

7. Ensemble d'éléments selon l'une quelconque des revendications précédentes, comprenant des poutres (24, 26) d'assemblages de deux éléments de construction (10) de manière à former des angles à 90°, ces poutres (24, 26) étant de forme générale parallélépipédique et comportant chacune un corps principal (24a, 26a) contre lequel les éléments de construction (10) viennent en appui contre deux côtés adjacents, et deux extensions (24b et 24c, 26b et 26c) prévues pour venir se loger transversalement entre les plaques (12, 14) d'un élément de construction (10) en étant en appui contre celles-ci et les âmes isolantes (16).

8. Ensemble d'éléments selon la revendication 7, dans lequel les poutres (24, 26) sont fixées par collage sur les plaques (12, 14) des éléments de construction (10).

9. Ensemble d'éléments selon la revendication 7 ou la revendication 8, dans lequel des vis sont prévues au niveau des extensions (24b et 24c, 26b et 26c) pour assujettir les poutres (24, 26) et les éléments de construction (10).

10. Bâtiment comprenant un ensemble d'éléments α' selon l'une quelconque des revendications précédentes, assemblés entre eux et constituant les murs dudit bâtiment.

## Patentansprüche

1. Bausatz für die Konstruktion und Isolierung des Gebäudes bestehend :
Bauelemente jedes der ersten und zweiten Versteifungsplatten (12, 14) einander identisch und rechteckig in der Form und mit einem Isolierkern (16) von rechteckiger Form, die zwischen die Platten und aus Kork gefertigt sind, die Versteifungsplatten (12, 14) und den Isolierkern gegeneinander montiert, der Isolierkern (16) mit kleineren Abmessungen als die der Versteifungsplatten (12, 14) und auf die Innenflächen dieser Platten (12, 14) zentriert ist, so daß jeder freie Rand des Kerns ausgespart ist und konstanten Abstand von den entsprechenden freien Rändern der Platten (12, 14);
wobei
für jede Bauelemente,
- das Verhältnis zwischen der Dicke der Isolierkern (16) und der Gesamtdicke der Verstärkungsplatten (12, 14) zwischen 0, 5 und 1 und vorzugsweise gleich 1 ist,
- die Dicke der isolierkern (16) zwischen 80 und 100 mm und vorzugsweise gleich 100 mm,
- einen peripheren Raum frei von Isolierkern (16) in Querrichtung zwischen den Platten (12, 14) besteht; und
- wobei der Satz von Elementen umfasst, vertikalen Befestigungsträger (22) so dass, um zwei Bauteile (10) zu verbinden nebeneinander angeordnet sind, wobei jeder Träger (22) von im wesentlichen Quaderform, und wenn zwei Bauelemente (10) in Kontakt gegeneinander an ihren langen Seitenrändern sind, der Träger (22) sich quer zwischen den Versteifungsplatten (12, 14) jedes Bauteils (10) estreckt, um die freigelassenen Raum von den Isolierstegen (16) zwischen den Versteifungsplatten (12, 14) der Bauelemente (10) zu füllen.

2. Bausatz nach Anspruch 1, bei dem die Versteifungsplatten (12, 14) aus Holz hergestellt sind.

3. Bausatz nach Anspruch 1 oder Anspruch 2, wobei der Isolierkern (16) aus agglomeriertem Kork gefertigt ist.

4. Bausatz nach einem der vorhergehenden Ansprüche, bei dem die Versteifungsplatten (12, 14) und der Isolierkern (16) miteinander durch Verkleben zusammengefügt sind.

5. Bausatz nach einem der vorhergehenden Ansprüche, wobei die Bauelemente (10) mit äußere und innere Fertigstellungsebenen (18, 20) gegen den Versteifungsplatten (12, 14) aufgebringt sind.

6. Bausatz nach einem der vorhergehenden Ansprüche, mit dem horizontalen Trägern, die zwischen den Versteifungsplatten (12, 14) der beiden Bauelemente (10) unmittelbar benachbart aufgenommen sind.

7. Bausatz nach einem der vorhergehenden Ansprüche, mit Trägern (24, 26), Zusammenfügen der beiden Bauelemente (10), um einen Winkel von 90 ° bilden, wobei diese Träger (24, 26) allgemein Quaderform sind und die jeweils einen Hauptkörper (24a, 26a), gegen die Bauelemente (10) zwei benachbarten Seiten anlegbar sind, und zwei Verlängerungen (24b und 24c, 26b und 26c), um quer zwischen den Versteifungsplatten (12, 14) eines Bauteils (10) zur Lagerung zu kommen, diesen und den Isolierkern (16) aufgenommen sind.

8. Bausatz nach Anspruch 7, wobei die Träger (24, 26) durch Verkleben an den Versteifungsplatten (12, 14) der Bauelemente (10) befestigt sind.

9. Bausatz nach Anspruch 7 oder Anspruch 8, wobei die Schrauben auf Verlängerungen (24b und 24c, 26b und 26c) der Träger (24, 26) und die Bauelemente (10) zu befestigen.

10. Gebäude mit einer Bausatz nach einem der vorhergehenden Ansprüche, wobei die Elementen zusammengebaut sind und zusammen die Wände des genannten Gebäudes bilden.

## Claims

1. Set of elements for the construction and insulation of a building, comprising:
construction elements each formed of first and second stiffening plates (12, 14) identical to each other and rectangular in shape, and with an insulating core (16) of rectangular shape disposed between said plates and made of cork, the stiffening plates (12, 14) and the insulating core being assembled to each other, the insulating core (16) having smaller dimensions than those of the stiffening plates (12, 14) and is centered on the internal faces of these plates (12, 14) so that each free edge of the core is internally offset and at a constant distance from the corresponding free edges of the plates (12, 14),
**characterized:**
- **in that**, for each building element,
- the ratio between the thickness of the insulating core (16) and the total thickness of the stiffening plates (12, 14) is between 0, 5 and 1, and preferably equal to 1,
- the thickness of the insulating core (16) is between 80 and 100 mm, and preferably equal to 100 mm,
- there exist transversely between said plates (12, 14) a peripheral space free of insulating core (16); and
- **in that** the set of elements comprises vertical fastening beams (22), making it possible to connect two building elements (10) arranged side by side, each beam (22) being of generally parallelepipedal shape and, when two construction elements (10) are in contact one with the other by their long side edges, the beam (22) extends transversely between the plates (12, 14) of each building element (10) to fill the space left free by the insulating cores (16) between the plates (12, 14) of said building elements (10).

2. Set of elements according to claim 1, wherein the stiffening plates (12, 14) are made of wood.

3. Set of elements according to claim 1 or claim 2, wherein the insulating core (16) is made of agglomerated cork.

4. Set of elements according to any preceding claim, wherein the stiffening plates (12, 14) and the insulation core (16) are assembled together by gluing.

5. Set of elements according to any preceding claim, wherein the building elements (10) comprises outer and inner cover plates (18, 20) mounted in support against the stiffening plates (12, 14).

6. Set of elements according to any one of the preceding claims, comprising horizontal beams being received between the plates (12, 14) of two building elements (10) immediately adjacent.

7. Set of elements according to any one of the preceding claims, comprising assembly beams (24, 26) for the assembly of two building elements (10) so as to form angles of 90°, these beams (24, 26) being generally of parallelepipedal shape and each comprising a main body (24a, 26a) against which the building members (10) bear against two adjacent sides, and two extensions (24b and 24c, 26b and 26c) provided for accommodating transversely between the plates (12, 14) of a building element (10) and for bearing against the latter and the insulating cores (16).

8. Set of elements according to claim 7, wherein the beams (24, 26) are adhesively secured on the plates (12, 14) of the building elements (10).

9. Set of elements according to claim 7 or claim 8, wherein screws are provided on the extensions (24b and 24c, 26b and 26c) for securing the beams (24, 26) and the building elements (10).

10. Building comprising a set of elements according to any preceding claim, assembled together and constituting the walls of said building.
